# EUROPEAN PATENT SPECIFICATION

(11) **EP 1 239 722 B1**
(45) Date of publication and mention of the grant of the patent: **13.02.2008**
(21) Application number: 00988832.2
(22) Date of filing: 22.12.2000
(51) Int. Cl.: A01C 1/06

(54) **SEED COATING FOR IMPROVING THE EFFICIENCY OF PLANT NUTRIENTS AND COATED SEED**
SAMENBESCHICHTUNG ZUR VEBESSERUNG DER EFFIZIENZ VON PFLANZENNÄHRSTOFFEN UND BESCHICHTETEM SAATGUT
ENROBAGE DE SEMENCE DESTINE A AMELIORER L'EFFICACITE DE NUTRIMENTS VEGETAUX ET DE LA SEMENCE ENROBEE

(30) Priority: 22.12.1999 FI 992768
(43) Date of publication of application: 18.09.2002
(73) Proprietor: Kemira GrowHow Oyj, 00181 Helsinki (FI)
(72) Inventor: HERO, Heikki, FIN-02200 Espoo (FI); KLEEMOLA, Jouko, FIN-05900 Hyvinkää (FI); PELTONEN, Jari, FIN-04330 Lahela (FI); SAARIKKO, Eija, FIN-02780 Espoo (FI)
(74) Representative: Svensson, Johan Henrik
(86) International application number: PCT/FI2000/001143
(87) International publication number: WO 2001/045489

(56) References cited:
- WO-A1-93/25078
- US-A- 4 251 952
- US-A- 4 761 423

## Description

The invention relates to a seed coating for improving the efficiency of plant nutrients, especially the efficiency of phosphorus and/or the efficiency of trace elements, during the early growth of the plant, to a coated seed, to a method for coating seed, and to a method for improving the efficiency of plant phosphorus and/or the efficiency of plant trace elements and for promoting plant growth during the early growth of the plant.

The rapidity with which the roots of a plant reach the fertilizer has great significance for the ability of the plant to take up the nutrients present in the fertilizer and for the success of the initial development and growth of the plant in the first three weeks.

The quantity of the principal nutrients (N, K, P, Ca, S, Mg) passing from fertilizers into plants, i.e. the efficiency of nutrients, usually varies from a few per cent to 70 - 80 per cent. The efficiency of phosphorus in particular is low, approx. 5 - 20 %. The efficiency of trace elements (B, Co, Cu, Fe, Mn, Mo, Zn, Cl) is often even lower than this.

The method of spreading a fertilizer, i.e. how far from the seed the fertilizer is deposited, affects the ability of the plant to take up the nutrients. The nutrients in a fertilizer deposited far from a seed, for example, at a distance of 6 cm from it, may have time to react with soil minerals and form poorly soluble compounds even before the plant roots have reached the location of the fertilizer.

When, for example, phosphorus fertilization is carried out in the manner described above by conventional broadcasting of the fertilizer on the soil surface or by mixing it into the surface layer of the soil, the efficiency of the phosphorus is 5 - 10 %. If the fertilizer is spread by row application or tape application at a specified distance from the seed, the efficiency of the phosphorus is approx. 10 %.

A somewhat better phosphorus efficiency is achieved when the phosphorus fertilizer is deposited in the immediate vicinity of the seed or when the seed is coated with the fertilizer. In this case the efficiencies are, respectively, 15 % and 20%.

The coating of plant seeds for various reasons has long been a known technology. There are different surface treatments, beginning from the simple and conventional seed dressing with biocides to combat plant diseases and noxious insects. In this case the seeds as such are treated with a fine-ground active agent or a powder mixture containing it, or the active agent is dissolved or slurried in a suitable solvent, often water or an organic solvent, and the seeds are then treated with the obtained solution or slurry.

Coating of seeds has also been used for delaying the germination of seeds. Polymers have been used as fixing agents also in the coating of seeds with substances having other effects. Coating may, for example, improve the ability of the seeds to withstand drought, heat, soil salinity, or other external stress factors.

With the help of coating, for example, lightweight seeds of rice can be rendered heavier, whereupon they will not be so easily carried by water or wind; see, for example, patent publication US 4,192,095.

It is also generally known to add nutrients to a coating in order to promote plant growth.

Grass seeds have been treated with, for example, lime or talc in order to ensure the establishment of a lawn (Scott 1975). The coating of seeds with nutrients is discussed in several studies (e.g. Heydecker and Coolbear 1977, Rebafka *et al.* 1983, Scott *et al.* 1987). The greatest problems have been a poor germination percentage of the seeds, especially when oil has been used as the fixing agent, and poor attachment of nutrients to the seed surface when aqueous solutions have been used.

A great deal of research has been conducted in order to solve these problems. Various fixing agent compositions have been experimented with for fixing nutrients or other growth-promoting substances or compositions to the surfaces of plant seeds.

In particular, the usability of various polymers has been experimented with. It is, for example, a known method to coat seeds with water-soluble polymers such as starch, methyl cellulose and gum arabic. The greatest disadvantage is the large amount of water associated with the use of these polymers. The handling of a large amount of water requires special apparatus, and the coating process is slow. In order to prevent the wetting of the seeds, the seeds must often be dried at a low temperature. The above-mentioned polymers often form a hard, easily breaking coat around the seeds.

Patent publication WO 9325078 describes a composition used for the coating of seeds, which composition contains a polysaccharide hydrolysate, for example, carboxymethyl cellulose or carboxymethyl starch hydroxylate. The aqueous solutions of these may also be sprayed in the form of relatively concentrated aqueous solutions (30 %) onto the seed surfaces.

The use of water-insoluble polymers, on the other hand, usually requires the use of an organic solvent, in which case a large solvent amount may promote the penetration of the polymer into the seed. It is also possible to use aqueous suspensions of these polymers for the treatment of seeds. For example, CA PLUS 112:17756 (PL 14618) and CA PLUS 122:49097 (PL 159474) describe such an application.

US patent publication 4,251,952 describes seeds coated with a mixture of a water-insoluble polymer and sugar. The polymers used are various commercial poly- or copolymers.

In addition to the disadvantages already stated above, the prior-known methods may also have the disadvantage of stickiness of the coated seed surfaces, causing the seeds to stick together and giving the seeds poor flow properties. The apparatuses required for the handling of the seeds also become easily soiled. A coating too moist, for its part, may cause premature germination of the seeds.

According to the present invention, a seed coating is provided for improving the efficiency of plant nutrients, in particular the efficiency of phosphorus and/or the efficiency of trace elements, during the early growth of the plant, which coating comprises
i) an aqueous fixing agent containing a fluid byproduct of agriculture or fermentation, and possibly an emulsified oil, and
ii) a fertilizer powder comprising nutrients and trace elements required by the plant and/or other substances affecting plant growth.

According to the invention there is also provided a coated seed having a coating for improving the efficiency of plant nutrients, in particular the efficiency of phosphorus and/or the efficiency of trace elements, during the early growth of the plant, which coating comprises:
i) an aqueous fixing agent containing a fluid byproduct of agriculture or fermentation, and possibly an emulsified oil, and
ii) a fertilizer powder comprising nutrients and trace elements required by the plant and/or other substances affecting plant growth.

The size of the seeds to be surface-treated and the type of their surface, which are properties specific to a plant species, affect the quantity of fixing agent that is required for fixing the desired amount of fertilizer powder to the seed surface. Preferably, the fixing agent is used in an amount of 0.5-5 parts by weight (w/w) and the fertilizer in an amount of 1-25 parts by weight (w/w) per 100 parts by weight (w/w) of seeds.

The said fixing agent may contain a fluid byproduct of agriculture or fermentation in an amount of 30-100 % by weight (w/w) and oil in an amount of 0-50 % by weight (w/w), any balance being water. The amount of oil is preferably 0-30 % by weight (w/w).

The said fluid byproduct of agriculture or fermentation may be, for example, molasses, such as root or cane molasses, vinasse or syrup, or a mixture thereof. The said byproducts contain varying amounts of water.

The said fixing agent may also contain polymers conventionally used as fixing agents in seed coating and mentioned also in the description of the state of the art.

In addition to the fluid byproduct of agriculture or fermentation, the said fixing agent may contain an emulsified oil, which is typically an oil in water emulsion. Such an emulsion is prepared from oil, water and a dispersing agent. Conventional dispersing agents suitable for this purpose may be used as the dispersing agent.

The said fixing agent may also be made up of only an aqueous, fluid byproduct of agriculture or fermentation.

The said fixing agent may also contain conventional preservatives and/or pH control agents.

The said oil is preferably a biodegradable or readily biodegradable plant or animal oil or mineral oil, such as white oil, or a mixture thereof.

The said fertilizer powder may contain, for example, monocalcium phosphate, monopotassium phosphate, ammonium phosphate, urea phosphate or a mixture of these, or any readily water-soluble multi-nutrient fertilizer. In addition it may contain micronutrients and/or trace elements. One kilogram of fertilizer may contain, for example, 5-200 g of magnesium, 1-50 g of zinc, 1-50 g of manganese, 30-200 g of sodium, and/or 1-20 mg of selenium. The fertilizer powder may also contain other substances affecting plant growth, such as a pesticide and/or a growth control agent and/or a growth promoter.

The particle size of the said fertilizer powder is typically 1-100 µm, preferably 10 - 50 µm.

According to the invention there is also provided a method for coating plant seeds, in which method
a) the seeds to be coated are placed in an apparatus suitable for the treatment of seeds,
b) an aqueous fixing agent is added, which contains a fluid byproduct of agriculture or fermentation, and possibly an emulsified oil, so that a fixing agent layer is formed on the seed surfaces,
c) a fertilizer powder is added, which comprises nutrients and trace elements required by the plant and/or other substances affecting plant growth, so that a coating is formed.

The method does not require special apparatus; the treatment of seeds may be carried out in any apparatus suitable for the treatment of seeds, even in a concrete mixer.

According to a preferred embodiment, in step a) there are used 100 parts by weight (w/w) of the seeds to be coated, in step b) 0.5-5 parts by weight (w/w) of the fixing agent, and in step c) 1-25 parts by weight (w/w) of the fertilizer.

In the method according to the invention, the fixing agents and fertilizer powder and material amounts defined above are used. The seeds may have been treated by known methods, for example, with a pesticide, even before the surface treatment according to the invention. The adding of the pesticide and/or growth control agent and/or growth promoter may also take place after the fixing agent treatment according to the invention before the adding of the fertilizer powder, or only after the fertilizer powder treatment or simultaneously therewith.

According to the invention it is also possible to repeat the above-mentioned procedure according to the invention, whereby the thickness of the fertilizer layer around the seed can be increased.

If it is desired to pellet the seeds, water and a clay mineral are added after the treatment according to the invention or simultaneously therewith.

According to the invention there is even provided a method for improving the efficiency of plant phosphorus and/or the efficiency of plant trace elements and for promoting plant growth during the early growth of the plant, in which method the plant seed is coated with a coating which contains
i) an aqueous fixing agent containing a fluid byproduct of agriculture or fermentation, and possibly an emulsified oil, and
ii) a fertilizer powder comprising nutrients and trace elements required by the plant and/or other substances affecting plant growth,
in which case the said coating can be used for replacing, especially during the early development of the plant, a portion of the phosphorus fertilizer required by the plant, conventionally given as surface or row fertilization.

In this method according to the invention, the fixing agents and fertilizer powder and material amounts defined above are used.

The following examples are intended to describe the invention in greater detail.

### Example 1

### Effect of the oil amount present in an oil in water emulsion on the emergence of wheat seeds

The effect of the oil amount present in an oil in water emulsion, used for the surface treatment of seeds, on the emergence of wheat seeds was studied in emergence tests carried out in field soils when the seeds had been treated with oil in water emulsions containing oil and water in different proportions.

For purposes of the test, three oil in water emulsions were prepared, the emulsions containing 25 ml, 30 ml and 55 ml of a biodegradable oil in 100 ml of emulsion. For introducing the emulsion onto the seed surfaces, the seeds were treated in a commercial test seed-dressing device (Hege) so that each emulsion was added to the seeds in an amount of 0.5 (v/w) %, 1.0 (v/w) % or 1.5 (v/w) %, whereby 9 batches of seeds with different surface treatments were obtained. From each surface-treated batch of seeds, 4 x 100 seeds were planted to germinate at a depth of 4 cm in 1-liter plastic pots filled with field soil. The controls were 100 untreated, similarly planted seeds. Each pot was watered at fixed intervals to maintain the soil moisture constant. When 11 days had elapsed from the planting, the emergence percentage was determined using the standard 5.4.A.3 defined by ISTA. The effect of the amount of oil introduced onto the seed surface on the emergence of wheat seeds is shown in Table 1.

**Table 1**

| **Effect of the water content of the oil on the emergence of wheat, data in table form** | | | |
|---|---|---|---|
| Test member | Wheat emergence % Oil in water emulsion added to seeds, (v/w) % | | |
| | 0.5 | 1.0 | 1.5 |
| Untreated | 95 | 95 | 95 |
| White oil, water content 45 % | 50 | 44 | 24 |
| White oil, water content 70 % | 77 | 68 | 49 |
| White oil, water content 75 % | 90 | 70 | 60 |

Table 1 shows that emergence is improved when the proportion of oil in the emulsion decreases. Furthermore, the fixing of the fertilizer powder to the seed surface was studied with the oil in water emulsions according to the example and with water. The fixing of the fertilizer improved when an oil in water emulsion was used.

### Example 2

### Effect of molasses added to a water in oil emulsion on the emergence of wheat seeds

For purposes of the test, there was prepared a series of oil in water emulsions containing different amounts of molasses. Each emulsion contained 25 % by volume (v/v) of a biodegradable oil and additionally so much molasses that in the completed emulsions the volume ratio of oil in water to molasses was 4:0, 3:1, 2:2, 1:3 and 0:4. The emergence tests were carried out as in Example 1.

The tests results are shown in Table 2.

**Table 2**

| **Effect of the mixing ratio of aqueous oil to molasses on the emergence of wheat, data in table form** | |
|---|---|
| Test member | Emergence % |
| Untreated | 93 |
| Molasses | 93 |
| Molasses + oil (1:3) | 89 |
| Molasses + oil (2:2) | 95 |
| Molasses + oil (3:1) | 94 |
| Oil | 81 |

The results show that the adding of molasses to the oil in water emulsion significantly promoted the emergence of wheat. Furthermore, the fixing of the fertilizer powder to the seed surface was studied with the emulsions according to the example. A molasses/oil in water emulsion fixed the fertilizer powder uniformly and better than the oil in water emulsion alone, and the technical quality was higher. On the other hand, when molasses alone was used, fixing of the fertilizer powder was sufficient in terms of technical quality.

### Examples 3 and 4

During the growth seasons of 1998 and 1999, a series of nine field tests was carried out in different parts of Finland to study the growth of barley seeds surface-treated with a phosphorus fertilizer by the procedure according to the invention and the uptake of phosphorus by the plants in cultivated soils whose phosphorus number, depicting their phosphorus status, ranged within 4.2 - 34.3 mg of phosphorus / 1 liter of soil. The determination of the phosphorus number was carried out on a solution obtained by leaching a soil sample batch with an ammonium acetate solution (pH 4.65).

The seeds according to the invention were treated, in the manner presented in Examples 1 and 2, by using a fixing agent which contained 12.5 % by weight (w/w) oil, 37.5 % by weight (w/w) water, and 50 % by weight (w/w) molasses. The seeds treated in this manner were coated with monopotassium phosphate.

In the study, the procedure according to the invention was compared with the growth and phosphorus uptake of barley seeds fertilized with conventionally used fertilization methods.

In the tests, the growth of the seedlings and their phosphorus uptake were measured after the first weeks after the planting. Samples were taken 3-4 weeks after the planting of the seed. The aboveground mass, i.e. phytomass, and the total phosphorus content of the seedlings were determined from the sample. The phosphorus uptake, which is the product of the phytomass and the total phosphorus content, was calculated.

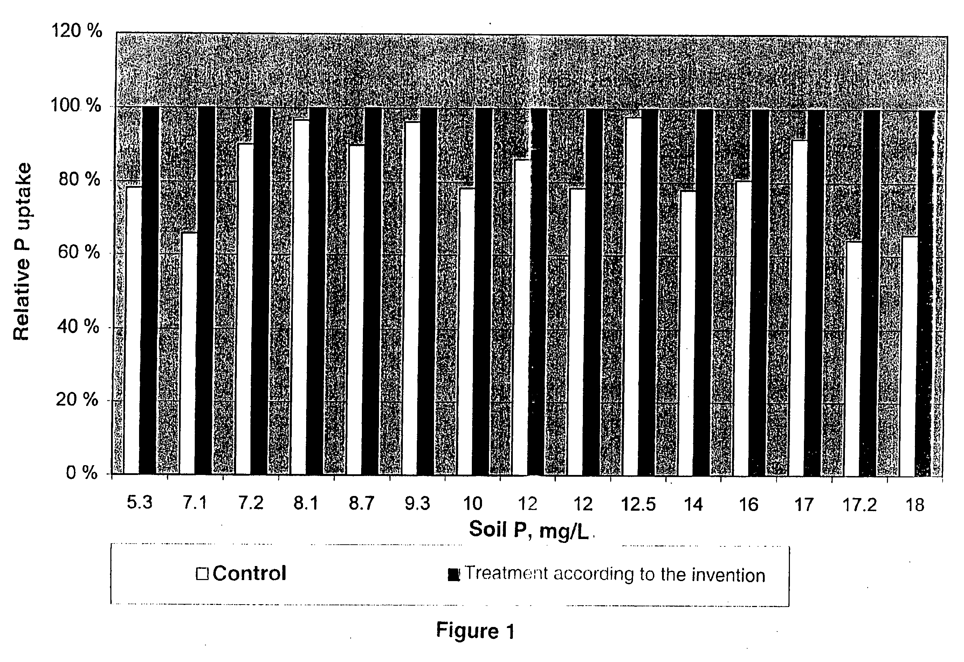

The results of Example 3 are shown in Table 3 and the results of Example 4 in Figure 1.

**Table 3**

| Effect of the fertilization method on the phytomass formation and phosphorus uptake of barley one month after the planting of the seed. The seeds according to the invention were coated with a moiasses/oil in water emulsion (2:2) and monopotassium phosphate. N and K fertilization was the same for all test members (five tests, Finland 1999). | | | | |
|---|---|---|---|---|
| Fertilization method | Phosphorus as granular fertilizer 6 cm from seed (local fertilizing) | Phosphorus as granular fertilizer 1 cm from seed (local fertilizing) | Seed treated in accordance with the invention with phosphorus | Seed treated in accordance with the invention with phosphorus |
| Total fertilizer phosphorus amount, kg/ha | 9 | 9 | 9 | 4.5 |
| Phytomass of barley one month after the planting of seed (control=100) | 100 | 104 | 111 | 113 |
| Relative phosphorus uptake by barley one month after the planting of seed (control = 100) | 100 | 104 | 111 | 113 |

The results in Table 3 show that barley seeds treated in accordance with the invention grew better and used phosphorus more effectively than did the test members fertilized by conventional local methods.

Figure 1 depicts graphically the test results of summers 1998 and 1999. In the figure, a comparison is made between the relative phosphorus uptake by a plant and its dependence on the location of the fertilizer. In each test the seeds had been fertilized so that
a) the fertilizer was in the immediate vicinity of the seed (in the figure, phosphorus uptake is indicated as 100 %),
b) the fertilizer was deposited at 6 cm from the seed (in the figure, a variable quantity).

On the basis of Figure 1 it can be noted that by the method according to the invention it is possible, without endangering the early development and growth of the sprouts, to decrease the proportion of readily soluble phosphorus in the total fertilization, whereby the risk of phosphorus leaching is reduced.

It can also be observed from Figure 1 that phosphorus uptake by seeds according to the invention is also rendered more effective when the soil itself already contains a large amount of phosphorus.

The seeds surface-treated according to the invention retained their germination capacity well. They were dry on the surface and therefore did not stick together but were, for example, during planting, well flowing and spreadable. It was also noted that the fertilizer was well fixed to the seed surfaces.

### Examples 5-7

In 2000, a number of experiments were performed in Denmark, Great Britain and Turkey. Seeds according to the invention were coated, in the manner presented in Examples 3 and 4, by using the coating composition presented in the examples, except in Example 7, in which urea phosphate was used in addition to monopotassium phosphate.

The results of Example 5 are shown in Table 4, those of Example 6 in Table 5, and those of Example 7 in Table 6.

**Table 4**

| Effect of the fertilization method on the phytomass formation and phosphorus uptake of barley one month after the planting of the seed. The seeds according to the invention were coated with a molasses/oil in water emulsion (2:2) and monopotassium phosphate. N and K fertilization was the same for all of the test members (Denmark 2000) | | | | | |
|---|---|---|---|---|---|
| Fertilization method | Control, no phosphorus fertilization | Phosphorus as granular fertilizer 6 cm from seed (local fertilizing) | Seed treated in accordance with the invention with phosphorus | Seed treated in accordance with the invention with phosphorus | Seed treated in accordance with the invention with phosphorus |
| Total fertilizer phosphorus amount, kg/ha | 0 | 20 | 1 | 2 | 3 |
| Phytomass of barley one month after the planting of seed (control = 100) | 100 | 100 | 106 | 109 | 111 |
| Relative phosphorus uptake by barley one month after the planting of seed (control = 100) | 100 | 103 | 106 | 118 | 122 |

**Table 5**

| Effect of the method of phosphorus fertilization on barley yield formation. The seeds according to the invention were coated with a molasses/oil in water emulsion (2:2) and monopotassium phosphate. N and K fertilization was the same for all of the test members (four tests, Great Britain 2000) | | | | | | |
|---|---|---|---|---|---|---|
| Fertilization method | Control, no phosphorus fertilization | Phosphorus as granular fertilizer 1 cm from seed (local fertilizing) | Phosphorus as granular fertilizer 1 cm from seed (local fertilizing) | Seed treated in accordance with the invention with phosphorus | Seed treated in accordance with the invention with phosphorus | Seed treated in accordance with the invention with phosphorus |
| Total fertileizer phosphorus amount, kg/ha | 0 | 11 | 22 | 2 | 4 | 8 |
| Threshed crop of barley, kg/ha, Auchmacoy (control=100) | 100 | 120 | 120 | 116 | 122 | 120 |
| Threshed crop of barley, kg/ha, Central (control=100) | 100 | 170 | 174 | 172 | 170 | 170 |
| Threshed crop of barley, kg/ha, Boscombe (control=100) | 100 | 105 | 102 | 100 | 104 | 103 |
| Threshed crop of barley, kg/ha, Leckford (control=100) | 100 | 100 | 107 | 102 | 102 | 100 |
| Mean | 100 | 124 | 126 | 123 | 125 | 123 |

**Table 6**

| Effect of the fertilization method on the emergence of a hybrid tomato, the quantity of its harvestable crop and the quality of the crop in outdoor cultivation. The seeds according to the invention were coated with a molasses/oil in water emulsion (2:2) and urea phosphate, or with a molasses/oil in water emulsion (2:2) and monopotassium phosphate (Turkey 2000). | | | |
|---|---|---|---|
| Fertilization method | Control (no phosphorus treatment of seeds) | Seeds treated according to the invention with phosphorus | Seeds treated according to the invention with phosphorus |
| Fertilization procedure | Local standard | Local standard + urea phosphate on seed surface | Local standard + monopotassium phosphate on seed surface |
| Number of plants | 94 | 116 | 96 |
| Mean tomato weight, g/tomato | 75 | 78 | 91 |
| Total yield, kg/ha | 266 | 273 | 273 |
| pH of tomato | 4.47 | 4.48 | 4.49 |

On the basis of Examples 5-7, a significantly improved efficiency of phosphorus uptake is achieved with the phosphorus treatment of seed according to the invention.

### LITERATURE

Heydecker, W and Coolbear, P. 1977. Seed treatments for improved performance - survey and attempted prognosis. Seed Sci. and Technol. 5:353-425.
Rebafka, F.-P., Batino, A. and Marschner, H. 1993. Phosphorus seed coating increases phosphorus uptake, early growth and yield of pearl millet (Pennisetum glaucum (L). R. Br.) grown on an acid sandy soil in Niger, West Africa. Fert. Res. 35: 151-160.
Scott., J.M. 1975. Effects of seed coating on establishment. N.Z. Journal of Agricultural Research 18:59-67.
Scott, J.M., Jessop, R.S., Steer, R.J. and Mclachlan, G.D. 1987. Effect of nutrient seed coating on the emergence of wheat and oats. Fert. Res. 14: 205-217.
International Seed Testing Association (ISTA). 1996. Seed Sci. & Technol. 24, Supplement. International Rules for seed testing. Zurich, Switzerland.

## Claims

1. A seed coating for improving the efficiency of plant nutrients during the early growth of the plant, **characterized in that** the coating comprises
i) an aqueous fixing agent containing a fluid byproduct of agriculture or fermentation, and an emulsified oil, and
ii) a fertilizer powder comprising nutrients and trace elements required by the plant and/or other substances affecting plant growth.

2. The seed coating according to Claim 1, **characterized in that** the said fixing agent contains a fluid byproduct of agriculture or fermentation in an amount of 30-100 % by weight (w/w) and oil in an amount of up to 0-50 % by weight (w/w), any balance being water.

3. The seed coating according to Claim 1 or 2, **characterized in that** the said fluid byproduct of agriculture or fermentation is molasses, vinasse or syrup, or a mixture thereof.

4. The seed coating according to any of the preceding claims, **characterized in that** the said oil is a biodegradable or readily biodegradable plant or animal oil or mineral oil such as white oil, or a mixture thereof.

5. The seed coating according to any of the preceding claims, **characterized in that** the particle size of the said fertilizer powder is 1-100 µm, preferably 10-50 µm.

6. A coated seed having a coating for improving the efficiency of plant nutrients during the early growth of the plant, **characterized in that** the coating comprises
i) an aqueous fixing agent containing a fluid byproduct of agriculture or fermentation, and an emulsified oil, and
ii) a fertilizer powder comprising nutrients and trace elements required by the plant and/or other substances affecting plant growth.

7. The coated seed according to Claim 6, **characterized in that** it contains 100 parts by weight (w/w) of seeds, 0.5-5 parts by weight (w/w) of the fixing agent, and 1-25 parts by weight (w/w) of the fertilizer.

8. The coated seed according to Claim 6 or 7, **characterized in that** it contains the coating defined in any of Claims 2-5.

9. A method for the coating of plant seed, **characterized in that**
a) the seeds to be coated are placed in an apparatus suited for the treatment of seeds,
b) an aqueous fixing agent is added, which contains a fluid byproduct of agriculture or fermentation, and an emulsified oil, so that a fixing agent layer is formed on the seed surfaces,
c) a fertilizer powder is added which comprises nutrients and trace elements required by the plant and/or other substances affecting plant growth, so that a coating is formed.

10. The method according to Claim 9, **characterized in that** in step a) there are used 100 parts by weight (w/w) of the seeds to be coated, in step b) 0.5-5 parts by weight (w/w) of the fixing agent, and in step c) 1-25 parts by weight (w/w) of the fertilizer.

11. The method according to Claim 9 or 10, **characterized in that** the fixing agent and/or the fertilizer powder defined in any of Claims 2-5 is used.

12. A method for improving the efficiency of plant phosphorus and/or the efficiency of plant trace elements and for promoting plant growth during the early growth of the plant, **characterized in that** the plant seed is coated with a coating comprising
i) an aqueous fixing agent containing a fluid byproduct of agriculture or fermentation, and an emulsified oil, and
ii) a fertilizer powder comprising nutrients and trace elements required by the plant and/or other substances affecting plant growth,
in which case a portion of the phosphorus fertilizer required by the plant, conventionally given as surface or row fertilization, can be replaced with the said coating, in particular during the early development of the plant.

## Patentansprüche

1. Saatbeschichtung zur Verbesserung der Effizienz von Pflanzennährstoffenwährend des frühen Wachstums der Pflanze, **dadurch gekennzeichnet, daß** die Beschichtung folgendes umfaßt:
i) ein wäßriges Fixiermittel, enthaltend ein flüssiges Nebenprodukt der Landwirtschaft oder Fermentation und ein emulgiertes Öl und
ii) ein Düngemittelpulver, umfassend Nährstoffe und Spurenelemente, die die Pflanze benötigt und/oder andere Substanzen, die das Pflanzenwachstum beeinflussen.

2. Saatbeschichtung gemäß Anspruch 1, **dadurch gekennzeichnet, daß** das Fixiermittel ein flüssiges Nebenprodukt der Landwirtschaft oder Fermentation in einer Menge von 30 bis 100 Gew.% (G/G) und Öl in einer Menge von bis zu 50 Gew.% (G/G) enthält, wobei die Balance Wasser ist.

3. Saatbeschichtung gemäß Anspruch 1 oder 2, **dadurch gekennzeichnet, daß** das flüssige Nebenprodukt der Landwirtschaft oder Fermentation Molasse, Vinasse oder Sirup oder eine Mischung davon ist.

4. Saatbeschichtung gemäß einem der vorstehenden Ansprüche, **dadurch gekennzeichnet, daß** das Öl ein bioabbaubares oder einfach bioabbaubares pflanzliches oder tierisches Öl oder Mineralöl ist, wie Weißöl, oder eine Mischung davon.

5. Saatbeschichtung gemäß einem der vorstehenden Ansprüche, **dadurch gekennzeichnet, daß** die Teilchengröße des Düngemittelpulvers 1 bis 100 µm, vorzugsweise 10 bis 50 µm beträgt.

6. Beschichtete Saat mit einer Beschichtung zur Verbesserung der Effizienz von Pflanzennährstoffen während des frühen Wachstums der Pflanze, **dadurch gekennzeichnet, daß** die Beschichtung folgendes umfaßt:
i) ein wäßriges Fixiermittel, enthaltend ein flüssiges Nebenprodukt der Landwirtschaft oder Fermentation und ein emulgiertes Öl und
ii) ein Düngemittelpulver, umfassend Nährstoffe und Spurenelemente, die die Pflanze benötigt und/oder andere Substanzen, die das Pflanzenwachstum beeinflussen.

7. Beschichtete Saat gemäß Anspruch 6, **dadurch gekennzeichnet, daß** sie 100 Gew.Teile (G/G) Saat enthält, 0,5 bis 5 Gew.Teile (G/G) des Fixiermittels und 1 bis 25 Gew.Teile (G/G) des Düngemittels.

8. Beschichtete Saat gemäß Anspruch 6 oder 7, **dadurch gekennzeichnet, daß** sie die wie in den Ansprüchen 2 bis 5 definierte Beschichtung enthält.

9. Verfahren zur Beschichtung einer Pflanzensaat, **dadurch gekennzeichnet, daß**
a) die zu beschichtende Saat in einer Vorrichtung plaziert wird, die für die Behandlung von Saat geeignet ist,
b) ein wäßriges Fixiermittel zugefügt wird, das ein flüssiges Nebenprodukt der Landwirtschaft oder Fermentation enthält und ein emulgiertes Öl, so daß eine Fixiermittelschichtauf den Saatoberflächen gebildet wird,
c) ein Düngemittelpulver zugefügt wird, das Nährstoffe und Spurenelemente enthält, die die Pflanze benötigt und/oder andere Substanzen, die das Pflanzenwachstum beeinflussen, so daß eine Beschichtung gebildet wird.

10. Verfahren gemäß Anspruch 9, **dadurch gekennzeichnet, daß** in Schritt a) 100 Gew.Teile (G/G) der zu beschichtenden Saat verwendet werden, in Schritt b) 0,5 bis 5 Gew.Teile (G/G) des Fixiermittels und in Schritt c) 1 bis 25 Gew.Teile (G/G) des Düngemittels.

11. Verfahren gemäß Anspruch 9 oder 10, **dadurch gekennzeichnet, daß** das Fixiermittel und/oder das Düngemittelpulver verwendet wird, das in einem der Ansprüche 2 bis 5 definiert ist.

12. Verfahren zur Verbesserung der Effizienz von Pflanzenphosphor und/oder der Effizienz von Pflanzenspurenelementen und zur Unterstützung des Pflanzenwachstums während des frühen Wachstums der Pflanze, **dadurch gekennzeichnet, daß** die Pflanzensaat mit einer Beschichtung beschichtet wird, umfassend
i) ein wäßriges Fixiermittel, enthaltend ein flüssiges Nebenprodukt der Landwirtschaft oder Fermentation und ein emulgiertes Öl und
ii) ein Düngemittelpulver, umfassend Nährstoffe und Spurenelemente, die die Pflanze benötigt und/oder andere Substanzen, die das Pflanzenwachstum beeinflussen,
in welchem Fall ein Teil des von der Pflanze benötigten Phosphordüngemittels, das konventionellerweise als Oberflächen- oder Reihendüngung verabreicht wird, durch die Beschichtung ersetzt werden kann, insbesondere während der frühen Entwicklung der Pflanze.

## Revendications

1. Enrobage de semence destiné à améliorer l'efficacité des nutriments végétaux lors de la croissance initiale de la plante, **caractérisé en ce que** l'enrobage comprend
i) un agent de fixation aqueux contenant un sous-produit fluide d'agriculture ou de fermentation, et une huile émulsifiée, et
ii) un engrais sous forme de poudre comprenant des nutriments et des oligo-éléments nécessaires pour la plante et/ou d'autres substances affectant la croissance de la plante.

2. Enrobage de semence selon la revendication 1, **caractérisé en ce que** ledit agent de fixation contient un sous-produit fluide d'agriculture ou de fermentation en une quantité de 30 à 100 % en poids et une huile en une quantité allant jusqu'à 50 % en poids , tout complément étant de l'eau.

3. Enrobage de semence selon la revendication 1 ou 2, **caractérisé en ce que** ledit sous-produit fluide d'agriculture ou de fermentation est une mélasse, une vinasse ou un sirop, ou un mélange de ceux-ci.

4. Enrobage de semence selon l'une quelconque des revendications précédentes, **caractérisé en ce que** ladite huile est une huile végétale ou animale biodégradable ou facilement biodégradable ou une huile minérale, telle qu'une huile blanche, ou un mélange de celles-ci.

5. Enrobage de semence selon l'une quelconque des revendications précédentes, **caractérisé en ce que** la taille de particule dudit engrais sous forme de poudre est de 1 à 100 µm, de préférence de 10 à 50 µm.

6. Semence enrobée possédant un enrobage destiné à améliorer l'efficacité des nutriments végétaux lors de la croissance initiale de la plante, **caractérisée en ce que** l'enrobage comprend
i) un agent de fixation aqueux contenant un sous-produit fluide d'agriculture ou de fermentation, et une huile émulsifiée, et
ii) un engrais sous forme de poudre comprenant des nutriments et des oligo-éléments nécessaires pour la plante et/ou d'autres substances affectant la croissance de la plante.

7. Semence enrobée selon la revendication 6, **caractérisée en ce qu'**elle contient 100 parties en poids de semences, 0,5 à 5 parties en poids d'agent de fixation et 1 à 25 parties en poids d'engrais.

8. Semence enrobée selon la revendication 6 ou 7, **caractérisée en ce qu'**elle contient l'enrobage défini dans l'une quelconque des revendications 2 à 5.

9. Procédé d'enrobage d'une semence végétale, **caractérisé en ce que**
a) les semences à enrober sont placées dans un appareil approprié pour le traitement des semences,
b) un agent de fixation aqueux est ajouté, lequel contient un sous-produit fluide d'agriculture ou de fermentation, et une huile émulsifiée, de sorte qu'une couche d'agent de fixation est formée sur la surface des semences,
c) un engrais sous forme de poudre est ajouté, lequel comprend des nutriments et des oligo-éléments nécessaires pour la plante et/ou d'autres substances affectant la croissance de la plante, de sorte qu'un enrobage est formé.

10. Procédé selon la revendication 9, **caractérisé en ce que** dans l'étape a), il est utilisé 100 parties en poids de semences à enrober, dans l'étape b) 0,5 à 5 parties en poids d'agent de fixation et dans l'étape c) 1 à 25 parties en poids d'engrais.

11. Procédé selon la revendication 9 ou 10, **caractérisé en ce que** l'agent de fixation et/ou l'engrais sous forme de poudre définis dans l'une quelconque des revendications 2 à 5 sont utilisés.

12. Procédé destiné à améliorer l'efficacité du phosphore végétal et/ou l'efficacité des oligo-éléments végétaux et à favoriser la croissance d'une plante lors de la croissance initiale de la plante, **caractérisé en ce que** la semence végétale est enrobée avec un enrobage comprenant
i) un agent de fixation aqueux contenant un sous-produit fluide d'agriculture ou de fermentation, et une huile émulsifiée, et
ii) un engrais sous forme de poudre comprenant des nutriments et des oligo-éléments nécessaires pour la plante et/ou d'autres substances affectant la croissance de la plante,
auquel cas une partie de l'engrais à base de phosphore nécessaire pour la plante, traditionnellement donné en tant que fertilisation de surface ou de rangée, peut être remplacée par ledit enrobage, en particulier lors du développement initial de la plante.
